# EUROPEAN PATENT SPECIFICATION

(11) **EP 2 136 652 B1**
(45) Date of publication and mention of the grant of the patent: **27.02.2013**
(21) Application number: 08748937.3
(22) Date of filing: 16.04.2008
(51) Int. Cl.: A23L 1/22, A23L 1/236, A23L 1/308, A23G 3/42, A23G 1/40

(54) **REDUCING THE SENSORY COOLING EFFECT OF POLYOLS**
MINDERUNG DES SENSORISCHEN KÜHLUNGSEFFEKTS VON POLYOLEN
REDUCTION D'EFFET DE SENSATION RAFRAICHISSANTE DE POLYOLS

(30) Priority: 16.04.2007 EP 07007709
(43) Date of publication of application: 30.12.2009
(73) Proprietor: Cargill, Incorporated, Wayzata, MN 55391-1063 (US)
(72) Inventor: VERCAUTEREN, Ronny, Leontina, Marcel, B-9120 Beveren (BE)
(74) Representative: Elseviers, Myriam
(86) International application number: PCT/EP2008/003031
(87) International publication number: WO 2008/125344

(56) References cited:
- EP-A- 0 489 515
- EP-A- 0 727 146
- US-A- 5 629 040
- US-A1- 2004 086 615
- US-A1- 2004 151 816
- US-B2- 6 875 460

## Description

The present invention relates to the use of fibers and/or sugar esters to reduce the cooling effect of polyols, in particular, erythritol.

In connection with the increasing demand for low-calory food products sugar is often replaced by sugar substitutes. Polyols such as erythritol serve as a sugar substitute in many food compositions, for example, in confectionery compositions, in particular, chocolates. The use of polyols for sweetening food often suffers from their negative heat of solution. The negative heat of solution of crystalline polyols causes a cooling sensation when the crystals dissolve in the mouth. This sensory cooling effect limits the use of crystalline polyols.

While e.g. erythritol has a sweet taste and considerably less calories than sugar, the use of erythritol suffers from the disadvantage that it changes the taste of the products. In particular, the use of erythritol suffers from the perception of a cooling effect and/or a burning aftertaste. When erythritol is used as a sugar substitute, the melting of chocolate in the mouth causes an unpleasant feeling of cold. The heat of solution of crystalline erythritol is -42.9 cal/g. The negative heat of solution of crystalline erythritol causes a cooling sensation when the crystals dissolve in the mouth. This cooling sensation is caused by the adsorption of energy needed to solvate the crystalline matrix. Since in currently produced sugar-free erythritol-containing chocolate erythritol is present in crystalline form, a strong cooling effect is noticed when eating such chocolate. Said cooling effect, however, is often felt to be unpleasant or negative.

U.S. 6,875,460 tries to reduce the cooling effect of erythritol by adding hydrogenated maltrodextrin. However, the observed effect has to be considered as a dilution effect.

US 2004/0086615 describes reduced calorie confectionery compositions. The confectionery composition includes erythritol and fructooligosaccharides. The composition may also include isomalt, polydextrose and/or high protein material.

EP 0 727 146 relates to a chocolate composition. The composition is characterized in that the normal sugar is replaced with a mixture of sugar alcohols consisting of erythritol and maltitol in such a ratio that the cooling effect is considerably reduced.

US 5,629,040 relates to a low calorie chocolate including a hydrogenated isomaltulose and a sugar showing a hygroscopic property and an emulsifying agent that comprises a lecithin and any of lipophilic emulsifying agents except for the lecithin.

EP 0 489 515 relates to a process for the production of chocolate which contains erythritol or maltitol as sweetener.

US 2004/0151816) relates to a soft serve ice cream comprising erythritol. Also disclosed is a process for producing no sugar-added, erythritol containing soft serve cream compositions.

Therefore, there is a continued need to identify and provide agents, by means of which the cooling effect of erythritol can be reduced or eliminated.

According to the invention this problem is solved by using fibers and/or sugar esters to reduce the cooling effect, in particular, the sensory cooling effect of erythritol.

The fibers used according to the invention preferably are dietary fibers and, in particular, water-soluble dietary fibers.

Fibers of the present invention are selected from pectin, guar gum, xanthan gum, locust bean gum, alginate, carrageenan, soluble cocoa fiber, soluble fiber of guar gum, cellulose, cellulose derivatives, beta-glucan, acetylated distarch adipate, n-OSA starch, hydroxypropyl starch phosphate, partially depolyermized fibers and mixtures of two or more thereof. Preferably the fibers are selected from pectin, xanthan gum, alginate, carrageenan, soluble (=hydrolysed) cocoa fiber, soluble (=hydrolysed) fiber of guar gum, acetylated distarch adipate, n-OSA starch, hydroxypropyl starch phosphate, partially depolyermised fibers (such as from pectin, guar gum, locust bean gum) and mixtures of two or more thereof. Most preferably the fiber is carrageenan.

Pectin is a heterogenous grouping of acidic structural polysaccharides found in fruit and vegetables and mainly prepared from waste citrus peel and apple pomace. Pectin has a complex structure, and a large part of the structure consists of homopolymeric partially methylated poly-α-(1-4)-D-galacturonic acid residues with substantial hairy non-gelling areas of alternating α-(1-2)-L-rhamnosyl-α-(1-4)-D-galacturonosyl sections containing branch points with mostly neutral side chains (1 - 20 residues) of mainly L-arabinose and D-galactose. The properties of pectins depend on the degree of esterification, which is normally about 70%. The low-methoxy pectins are <40% esterified, while high-methoxy pectins are > 43% esterified, usually 67%.

Amidated pectin is also a suitable candidate for the fibers of the current invention.

Guar gum is a galactomannan consisting of a (1-4)-linked β-D-mannopyranose backbone with branchpoints from their 6-positions linked to α-D-galactose. There are between 1.5 to 2 mannose residues for every galactose residue. Guar gum is made up of non-ionic polydisperse rod-shaped polymers consisting of molecules made up of about 10,000 residues. Guar gum is highly water-soluble and e.g. more soluble than locust bean gum.

Xanthan gum is a microbial desiccation resistant polymer prepared commercially by aerobic submerged fermentation. It is naturally produced to stick bacteria to the leaves of cabbage-like plants. Xanthan gum is an anionic polyelectrolyte with a β-(1-4)-D-glucopyranose glucan backbone with side chains of (3-1)-α-linked D-mannopyranose(2-1)-β-D-glucuronic acid-(4-1)-β-D-mannopyranose on alternating residues. Slightly less than half of the terminal mannose residues are 4,6-pyruvated and the inner mannose is mostly 6-acetylated. Each molecule consists of about 7000 pentamers and the gum is less polydisperse than most hydrocolloids.

Locust bean gum is a galactomannan similar to guar gum. It is polydisperse and consists of non-ionic molecules made up of about 2000 residues. Locust bean gum is less soluble and has lower viscosity than guar gum as it has fewer galactose branchpoints. It needs heating to dissolve but is soluble in hot water.

Beta-glucan occurs in the bran of grains such as barley, oats, rye and wheat. Beta-glucans, typically consists of linear unbranched polysaccharides of linked β-(1-3) D-glucopuranose units in a random order.

Alginates are produced by seaweeds and are linear unbranched polymers containing β-(1-4)-linked D-mannuronic acid and α-(1-4)-linked L-guluronic acid residues. Alginates consist of blocks of similar and strictly alternating residues.

Carrageenan is a collective term for polysaccharides prepared by alkaline extraction from red seaweed. The basic structure of carrageenan consists of alternating 3-linked -β-D-galactopyranose and 4-linked-α-D-galactopyranose units. The regular backbone structure of the basic structure of carrageenan is disrupted by a more or less ordered distribution of sulphate hemi ester groups. Carrageenan can also contain some methoxy and pyruvate groups. Carrageenans are linear polymers of about 25,000 galactose derivatives.

Partially depolymerized fibers are depolymerized heteropolysaccharides having a molecular weight of less than 10,000 and having an average degree of polymerization (DP) of 3 to 30.

Cellulose is an aggregate of linear polymers of D-glucopyranosyl residues in the chain form, which are linked together entirely in the β-1,4 configuration. Cellulose and cellulose derivatives include microcrystalline cellulose, microfribillated cellulose, cellulose ethers such as carboxymethyl cellulose, hydroxypropylmethyl cellulose, methyl cellulose, ethylmethyl cellulose, hydroxypropyl cellulose and the like. Starch is a mixture of two molecular entities, namely amylose and amylopectin. Amylose is the starch polysaccharide that primarily consists of long chained α-1,4-linked D-glucose molecules with a DPn between about 500-5000. Amylopectin consists of relatively short chain alpha-1,4-linked D-glucose molecules interconnected by many alpha-1,6-branch points (approximately 1/25). The molecular weight of amylopectin molecules is in the range of several millions. The amylopectin / amylose ratio can vary between 100:0 and 10:90 depending on the plant source. Typical commercial starch sources are maize, waxy maize, high amylose maize, wheat, potato, tapioca, rice, pea and sago. Starches are organized in the form of cold water insoluble granules with a diameter from 0.5 µm to about 100 µm. These starch granules can be obtained depending on the original minor amounts of proteins (usually less than 0.5%) or lipids (up to 1%). Starches can be further modified. Modified starches are products whose properties have been altered by physical, chemical means or by the introduction of substituents and whose granular and molecular structures, respectively, are more or less retained. Chemical modification can occur by: esterification or etherification and oxidation reactions at the hydroxyl groups at C atoms 2, 3 and 6. Typical substituents at the hydroxyl groups in modified starches are acetyl, n-octenylsuccinate, phosphate, hydroxypropyl, or carboxymethyl groups. Furthermore, the modification can also lead to the formation of cross-links by substituents like phosphate, adipate or citrate. These chemical modifications can be followed by scissions of the glucosidic alpha-1,4 and alpha-1,6 bonds. Such a partial degradation of starch is usually obtained by treatment with acids, oxidizing agents or with hydrolytic enzymes. Finally, native or modified starch can be converted into a coldwater dispersible form by a heat-moisture treatment followed by drying (e.g. drum drying or spray-cooking). Preferably the starch derivatives of the current invention are acetylated distarch adipate, n-OSA (n-octenylsuccinate) starch, hydroxypropyl starch phoshate and mixtures of two or more thereof.

According to an embodiment of the invention, sugar esters can be employed. Sugar esters are preferably sucrose esters of fatty acids. Sucrose fatty acid esters are nonionic surfactants consisting of sucrose as hydrophilic group and fatty acid as lipophilic group. Examples of fatty acids esters are stearate, oleate, palmitate, myristate, laurate, mixtures of one or more, and the like. Suitable fatty acids for forming the sugar esters, in particular, are acids having at least 10, preferably at least 12, more preferably at least 14 C atoms and preferably up to 30, in particular, up to 24 C atoms. The carbon chains can be linear or branched and saturated or have one or more double bonds.

In a preferred embodiment, fibers or/and sugar esters are used to reduce the sensory cooling effect of erythritol. While the energy may remain the same, already an extension of the cooling effect over a longer time may result in a reduced perception of the cooling effect and, thus, in a reduction of the sensory cooling effect.

The inventors have found that the cooling effect and, in particular, the sensory cooling effect produced by erythritol can be reduced by adding fibers and/or sugar esters. This makes it possible to use erythritol, which is very low in calories (about 0.2 cal/g), as a sugar substitute in food products and at the same time to avoid an effect on the taste of the food products. According to the invention it has been found that it is possible to reduce the cooling effect, in particular, the sensory cooling effect exerted by crystalline erythritol to a large extent. In particular, the use of a co-processed mixture of erythritol with fibers and/or sugar esters, wherein often a minor amount of fibers and/or sugar esters is sufficient, leads to a significant reduction of the cooling effect, in particular, the sensory cooling effect. The reduction of the cooling effect seen with erythritol/fiber and/or sugar ester combination is also seen in the final food product such as a chocolate.

The use of fibers and/or sugar esters for reducing the cooling effect of erythritol and, in particular, erythritol in a confectionery composition is especially preferred.

Confectionery compositions within the scope of the present invention include chocolate, crystalline and non-crystalline products. Non-crystalline products within the scope of the present invention include hard candies, brittle, caramel, toffee, licorice, jellies, chewing gums and gums. Crystalline products within the contemplation of the confectionery composition of the present invention encompass fondants and creams, fudge, nougats, marshmallows, pralines, pressed candies, e.g; tablets, marzipan and pastes and panned candies (dragees). Combinations of these products are also within the scope of confectionery compositions. For example, chocolate-coated crystalline or non-crystalline products.

Basically, however, the reduced cooling effect according to the invention can be applied advantageously to any food product, in the case of which erythritol is used as a sweetener, for example, chocolate, bakery products such as pastries and cookies, hard and soft candies, dairy products such as icecream and others. Especially preferably, fibers and/or sugar esters are used according to the invention to reduce the cooling effect of erythritol in chocolate.

Chocolate, an important confectionery composition within the contemplation of the present invention, encompasses sweet chocolate, semi-sweet chocolate, bitter-sweet chocolate, which as a group are often referred to as dark chocolate, milk chocolate, buttermilk chocolate, skim milk chocolate and white chocolate. In addition, any of the aforementioned chocolates filled with nuts, fruits, rice and other fillings used in the chocolate arts are also within the scope of the current invention. Chocolate also includes any confectionery product having qualities sufficient to impart chocolate taste, chocolate flavor an any other material that performs as a chocolate analogue or a chocolate substitute.

According to the invention an especially good effect was observed when the amount of fibers and/or sugar esters present in the total composition is in range of 0.1 to 50 wt.%, in particular, of 1 to 5 wt.%, more preferred of 2 to 4 wt.%. In food compositions to be employed in the present invention, erythritol usually is present in the total composition in an amount of 1 to 70 wt.%, in particular, in an amount of 5 to 60 wt.% and preferably in an amount of 10 to 50 wt.%. The weight ratio of fibers and/or sugar esters to erythritol preferably is from 1:300 up to 1:5, preferably from 1:300 to 1:10, in particular, from 1:200 up to 1:20 and more preferably from 1:100 to 1:30. In a particularly preferred embodiment the ratio is from 1:70 to 1:10, in particular, from 1:50 to 1:20. Especially preferably, the cooling effect is reduced according to the invention by substituting maximally 10 w/w percent of erythritol present in the food product with fibers and/or sugar esters.

The food article, in the case of which the cooling effect of erythritol is reduced according to the invention, preferably has a reduced calory content compared to the same food article comprising sucrose instead of polyols such as erythritol. Preferably, the food article, in particular, the confectionery composition, and most preferably the chocolate, has a reduced calory content compared to a conventional product containing sucrose of at least 10%, more preferably at least 20% and most preferably at least 30%. The food article, especially the confectionery composition, in particular, has less than 450 kcal/100 g, more preferably less than 400 kcal/100 g, even more preferably less than 300 kcal/100 g, in particular, less than 200 kcal/100 g and most preferably less than 100 kcal/100 g.

Further, a high intense sweetener can be added. A high intensity sweetener, which can be used as non-nutritive sweetener can be selected from the group consisting of aspartame, acesulfame salts such as acesulfame-K, saccharins (e.g. sodium and calcium salts), cyclamates (e.g. sodium and calcium salts), sucralose, alitame, neotame, steviosides, glycyrrhizin, neohesperidin dihydrochalcone, monellin, thaumatin, brazzein and mixtures thereof.

Further, the inventors have found that the fibers and/or sugar esters can be introduced into the food composition with different methods while maintaining their ability to reduce the cooling effect of erythritol. Therefore, the invention also relates to a method for producing an erythritol-fiber composition or an erythritol-sugar ester composition comprising the steps of:
(i) dry-blending of fibers and/or sugar esters and erythritol
(ii) melting of said dry blend,
(iii) solidification at lower temperature than temperature of step (ii).

In this embodiment, fibers and/or sugar esters and polyol such as erythritol are dry-blended first. Then, the mixture is heated, in particular, to 100-150 °C, more preferably to 120-140 °C. The obtained melt is then allowed to crystallize out (=solidify) at lower temperature (e.g. 20-35 °C), in particular, at room temperature.

Alternative methods include: a method for producing an erythritol-fiber composition or an erythritol-sugar ester composition, comprising the steps:
(i) preparing an aqueous solution or dispersion of fibers and/or sugar esters and erythritol,
(ii) warming said solution, and
(iii) evaporating water or cooling down the solution and optionally adding alkanol for inducing crystallization.

In this method, first, an aqueous solution or dispersion of fibers and/or sugar esters and polyol such as erythritol is prepared. Said aqueous solution or dispersion is then warmed, in particular, to 70-130 °C, preferably to 80-120 °C. By heating, water is removed from the solution/dispersion. Preferably, water is removed by evaporation (e.g. under pressure, under vacuum or under atmospheric pressure) or by spray-drying. The solution then can be cooled down, in particular, to a lower temperature of 20-35 °C for further crystallization. Suitable alkanols are e.g. ethanol, isopropanol or mixtures thereof.

Another method relates to producing an erythritol-fiber composition or an erythritol-sugar ester composition, comprising the step:
(i) dry-blending of erythritol and fibers and/or sugar esters.

It is possible to effectively reduce the cooling effect of erythritol by dry-blending fibers and/or sugar esters and erythritol.

The above-described co-crystallization methods are preferred. It has been found that an especially good reduction of the cooling effect was often achieved by co-crystallization methods.

A co-melted composition of erythritol and sugar esters and/or fibers selected from pectin, guar gum, xanthan gum, locust bean gum, alginate, carrageenan, soluble cocoa fiber, soluble fiber of guar gum, cellulose, cellulose derivatives, beta-glucan, acetylated distarch adipate, n-OSA starch, hydroxypropyl starch phosphate, partially depolymerised fibers and mixtures of two or more thereof.

A composition wherein the weight ratio of sugar esters and/or fibers to erythritol is from 1:5 to 1:300, preferably from 1:10 to 1:300.

The reduction of the cooling effect, in particular, the sensory cooling effect of erythritol by fibers or sugar esters can be verified, for example, by the following methods or techniques. In particular, analytical techniques can be used to evaluate erythritol-fiber combinations as well as final products. Such techniques include calorimetric measurements which allow to determine the heat of solution and the rate of the dissemination of the heat of solution.

Further, the reduction of the cooling effect of erythritol can be evaluated by taste panels of persons. It is possible for preliminary tests to evaluate erythritol fiber samples or erythritol-sugar ester samples. However, it is preferred to evaluate the reduction of the cooling effect of erythritol using the final product, e.g. a confectionery composition or a chocolate. Preferably, the same food article produced either with erythritol without fibers or produced with sugar is used as reference material for the evaluation.

The preferred method to screen for reduction of the sensory cooling effect in the final product is the use of taste panels.

However, also the following analytical results are indicative of a reduction of the cooling effect, in particular, a lower melting enthalpy, a lower melting temperature or a change of shape of the melting peak. Lower melting enthalpy or lower melting temperature, in particular, refers to a reduction of at least 5%, more preferably of at least 10%.

The invention is further illustrated by the following Examples. Unless otherwise indicated, all % are given as wt.%.

### Example 1

97% wt Erythritol (Eridex, Cargill) was dry blended together with 3% wt of carrageenan (iota carrageenan from Cargill). The dry blend was put in a beaker and heated in an oil bath at 150°C, until full melting occurred. The resulting melt was poured out on an aluminum plate, where it crystallized out. The solid material was milled. The obtained powder had a particle size smaller than 200 µm (for 80%).

### Example 2

### Measurement of the cooling effect

50 ml of distilled water, warmed up to 37°C, was brought into a double jacketed beaker of 100ml. The beaker was thermostated at 37°C, by circulation of warm water. A thermo couple was inserted into the water for temperature registration. Stirring was done by a mechanical stirrer (1600 rpm).

When the temperature of the water was constant at 37°C, heating was switched off and 25 g of the erythritol /carrageenan product, made according to example 1, was added to the beaker and the temperature drop was recorded for 30 seconds.

The results are presented in table 1:

**Table 1:**

| Composition | temp. after 0" (°C) | temp. after 5" (°C) | temp. after 10" (°C) | temp. after 20" (°C) |
|---|---|---|---|---|
| erythritol | 37.0 | 29.1 | 23.8 | 22.3 |
| 97% erythritol 3% carrageenan | 37 | 34.8 | 32.5 | 28.9 |

The erythritol /carrageenan sample has a much less pronounced cooling effect, which can be seen in the difference with the temperature.

### Example 3

Several co-melted products of erythritol and sugar esters (Mitsubishi) (different amounts based on dry weight erythritol) were prepared according to the melt procedure of example 1.
The cooling effect of each co-melted product was measured by using the method according to example 2.

The results are displayed in Table 2 :

**Table 2**

| Composition | temp. after 0" (°C) | temp. after 5" (°C) | temp. after 10" (°C) | temp. after 20" (°C) |
|---|---|---|---|---|
| erythritol | 37.0 | 29.1 | 23.8 | 22.3 |
| 95% erythritol/1 % S170 | 37.0 | 36.5 | 35.2 | 32.1 |
| 95% erythritol/5% S270 9.5% erythritol/ | 37.0 | 35.9 | 33.9 | 29.8 |
| 0.5% S570 | 37.0 | 32.7 | 26.7 | - |
| 98% erythritol/2% S570 | 37.0 | 33.1 | 27.8 | - |
| 95% erythritol/5% S570 | 37.0 | 35.7 | 32.0 | 28.0 |
| 95% erythritol/5% S1570 | 37.0 | 34.0 | 31.2 | 26.0 |

| | | | | |
|---|---|---|---|---|
| S170 = sucrose stearate approx. 100% di,tri, poly ester S270 = sucrose stearate approx. 10% mono ester, and 90% di,tri, poly ester S570 = sucrose stearate approx. 30% mono ester, and 70% di,tri, poly ester S1570= sucrose stearate approx. 70% mono ester, and 30% di,tri, poly ester | | | | |

The combination of erythritol and sugar esters gives a reduction of the cooling effect compared to pure erythritol.

### Example 4

A co-melted products of 97% wt erythritol and 3%wt of pectin (Unipectin RS ND from Cargill) was prepared according to the melting procedure of example 1.
The cooling effect of each compound was measured using the method as outlined in example 2.

Table 3 is showing the result.

**Table 3**

| Composition | start temperature (°C) | temp. after 5" (C°) | temp. after 10" (C°) | temp. after 20" (C°) |
|---|---|---|---|---|
| erythritol | 37.0 | 29.1 | 23.8 | 22.3 |
| 97%erythritol/ 3% pectin | 37.0 | 33.2 | 28.8 | 25.5 |

The erythritol/pectin sample shows the reduced cooling effect.

### Example 5

A co-melted products of 97%wt erythritol and 3%wt of alginate (Algogel 6021 from Cargill) was prepared as exemplified in example 1.
The cooling effect was measured using the method as outlined in example 2.
Table 4 is showing the result:

**Table 4**

| Composition | start temperature (°C) | temp. after 5" (°C) | temp. after 10" (°C) | Temp. after 20" (°C) |
|---|---|---|---|---|
| Erythritol | 37 | 29.1 | 23.8 | 22.3 |
| 97% erythritol/ 3% alginate | 37 | 31.3 | 27.2 | 25 |

The erythritol/alginate sample shows the reduced cooling effect.

### Example 6

A co-melted products of 97% wt erythritol and 3%wt of guar gum (Cargill) was prepared as exemplified in example 1.
The cooling effect was measured using the method as outlined in example 2.
Table 5 is showing the result :

**Table 5**

| Composition | start temperature (°C) | after 5 sec (°C) | after 10 sec (°C) | after 20 sec (°C) |
|---|---|---|---|---|
| erythritol | 37.0 | 29.1 | 23.8 | 22.3 |
| 37% erythritol/ 3% guar gum | 37.0 | 31.2 | 26.6 | 25.2 |

The erythritol/guar gum sample shows the reduced cooling effect.

### Example 7

A co-melted product of 95% wt erythritol and 5%wt of agar agar (HP900 Cargill) was prepared as exemplified in example 1.
The cooling effect was measured using the method as outlined in example 2.
Table 6 is showing the result :

**Table 6**

| Composition | start temperature (°C) | after 5 sec (°C) | after 10 sec (°C) | after 20 sec (°C) |
|---|---|---|---|---|
| erythritol | 37.0 | 29.1 | 23.8 | 22.3 |
| 95% erythritol/ 5% agar agar | 37.0 | 33.7 | 32.2 | 28.8 |

The erythritol/agar agar sample shows the reduced cooling effect.

### Example 8

A co-melted product of 95% wt erythritol and 5% of soluble cocoa fiber (Natraceuticals, Spain) was prepared as exemplified in example 1.
The cooling effect was measured using the method as outlined in example 2.
Table 7 is showing the result :

**Table 7**

| Composition | temp. after 0 sec (°C) | temp. after 5 sec (°C) | temp. after 10' sec (°C) | temp. after 20 sec(° C) |
|---|---|---|---|---|
| erythritol | 37.0 | 29.1 | 23.8 | 22.3 |
| 35% erythritol/ 5% soluble cocoa fiber | 37.0 | 34.3 | 29.8 | 25.3 |

The erythritol/soluble cocoa fiber sample has a reduced cooling effect.

### Example 9

A co-melted product of 90% wt. erythritol and 10%wt. of partially depolymerized guar gum (Benefiber, Novartis) was prepared as exemplified in example 1.

The cooling effect of the co-melted product was measured using the method as outlined in example 2.

Table 8 is showing the result:

**Table 8**

| Composition | temp. after 0 ses (°C) | temp. after 5' sec (°C) | temp. after 10' sec (°C) | temp. after 20 sec (°C) |
|---|---|---|---|---|
| erythritol | 37.0 | 29.1 | 23.8 | 22.3 |
| 90% erythritol/ 10%partially depolymerized guar gum | 37.0 | 31.6 | 28.4 | 27.4 |

The erythritol/ partially depolymerized guar gum sample has a much less pronounced cooling effect.

### Example 10

A co-melted products of 98% wt. erythritol, 0.5% S170 sugar ester (Mitsubishi) and 1.5% of carrageenan (iota carrageenan, Cargill) was prepared as exemplified in example 1.
The cooling effect was measured using the method as outlined in example 2.

Table 9 is showing the result :

**Table 9**

| Composition | temp. after 0 sec (°C) | temp. after 5' sec(°C) | temp. after 10' sec (°C) | temp. after 20 sec (°C) |
|---|---|---|---|---|
| erythritol, | 37.0 | 29.1 | 23.8 | 22.3 |
| 98.0% erythritol/ 1.5% carrageenan + 0.5% S170 sugar ester | 37.0 | 36.1 | 33.6 | 28.1 |

| | | | | |
|---|---|---|---|---|
| S170 = sucrose stearate approx. 100% di,tri, poly ester | | | | |

The erythritol/ carrageenan-sugar ester sample has a much less pronounced cooling effect.

### Example 11

A co-melted product from 97%wt erythritol and 3%wt carrageenan (iota carrageenan, Cargill) was obtained according to the melting method of example 1.

A 97%wt erythritol and 3%wt carrageenan (iota carrageenan, Cargill) combination was obtained from a solution of erythritol and carrageenan in the following way:
100g a blend of 97%wt erythritol with 3%wt carrageenan was added to 100g of water. The solution was heated with a heating plate in a beaker to 140°C. The obtained melt was poured on an aluminium plate to let it crystallizing out. The obtained crystals were dried under vacuum at 100°C for 14 hours. The crystal were milled.

90% erythritol/10% maltodextrin DE 14 (01910 from Cargill) - having the following values (90% wt erythritol (Eridex, Cargill) was dry blended together with 10% maltodextrin (01910 from Cargill) and the further procedure was similar to example 1.).

The results are shown in table 10 :

**Table 10**

| Composition | start temperature (°C) | Temp. after 5 sec (°C) | Temp. after 10 sec (°C) | Temp after 20 sec (°C) |
|---|---|---|---|---|
| erythritol | 37 | 29.07 | 23.75 | 22.32 |
| 97% erythritol/ 3% carrageenan (made from solution) | 37 | 33.32 | 31.14 | 26.7 |
| 97% erythritol/ 3% carrageenan (co-melt) | 37 | 34.8 | 32.5 | 28.9 |
| 90% erythritol/10% maltodextrin DE 14 | 37 | 28.91 | 25.65 | 23.89 |

The addition of maltodextrin is only resulting in a dilution effect and there is not a reduction of the cooling effect.

The findings prove that both products have an effect on the reduction of the cooling of erythritol.

### Example 12

### Manufacture of chocolate

Chocolate was produced with ingredients according to the following Table

| | ***Milk*** | ***Dark*** |
|---|---|---|
| **Cocoa mass** | ***11.50%*** | **42%** |
| **Cocoa butter** | ***23.50%*** | ***13.50%*** |
| **Sweetener** | ***42.50%*** | ***44%*** |
| **Skimmed milkpowder** | **22%** | |
| **Lecithin** | ***0.48%*** | ***0.48%*** |

The ingredients were mixed in a Z blender at 45 °C at a rate of 35 rpm for mixing and 50-60 rpm for conching.

For producing dark chocolate, first, the sweetener was put in the Z blender. Subsequently, part of the cocoa mass and then part of the cocoa butter was added. Refining was done with 3 rolls refiner. The powder obtained after the refining was put again into the Z blender for 1-2 h. The temperature of the Z blender was increased to 70 °C and the second part of the cocoa mass was added. After 14 h the second part of cocoa butter was added. The temperature of the mixture was decreased to 50 °C. One hour before the end of the process lecithin was added.

The following chocolate formulations were prepared:

| **No.** | **Formulation (w/w)** | **Type** |
|---|---|---|
| 1 | 100 ErOH | dark |
| 2 | 98/2 ErOH/Algogel 6021 | dark |
| 3 | 90/10 ErOH/soluble cocoa fiber | milk |
| 4 | 95/5 ErOH/carrageenan | milk |

Formulation No. 1 using 100% erythritol (ErOH) as sweetener was used as reference. For mixture No. 4 no cooling effect of erythritol was observed, i.e. the cooling effect of erythritol was completely suppressed. A strong reduction of the cooling effect was observed for formulation Nos. 2 and 3, resulting in an observed slight cooling of the chocolate products.

The preparation of milk chocolate corresponds to the preparation of dark chocolate, except the skimmed milkpowder is added together with the sweetener.

### Reduction of calories

A milk chocolate according to No. 4 containing a formulation of 95/5 erythritol/carrageenan as sweetener has 360 kcal/g. Compared to this, a reference chocolate containing sucrose has about 530 kcal/100 g, which means a caloric reduction of 32% for the chocolate produced according to the invention.

## Claims

1. Use of sugar esters and/or fibers selected from pectin, guar gum, xanthan gum, locust bean gum, alginate, carrageenan, soluble cocoa fiber, soluble fiber of guar gum, cellulose, cellulose derivatives, beta-glucan, acetylated distarch adipate, n-OSA starch, hydroxypropyl starch phosphate, partially depolymerised fibers and mixtures of two or more thereof to reduce the cooling effect, in particular, the sensory cooling effect of erythritol and wherein the ratio of the combined weight of fibers and/or sugar esters to the weight of erythritol is from 1:5 to 1:300, preferably from 1:10 to 1:300.

2. The use of claim 1 for reducing the cooling effect of erythritol in a confectionery composition.

3. The use of any of the preceding claims, wherein the confectionery composition is a chocolate composition.

4. The use of any of the preceding claims, wherein the erythritol is present in the total composition in an amount of 1 to 70 wt.%, in particular, in an amount of 5 to 60 wt.%.

5. The use of any of the preceding claims, wherein a high intensity sweetener is additionally added.

6. A co-melted composition of erythritol and sugar esters and/or fibers selected from pectin, guar gum, xanthan gum, locust bean gum, alginate, carrageenan, soluble cocoa fiber, soluble fiber of guar gum, cellulose, cellulose derivatives, beta-glucan, acetylated distarch adipate, n-OSA starch, hydroxypropyl starch phosphate, partially depolymerised fibers and mixtures of two or more thereof and wherein the weight ratio of fibers and/or sugar esters to erythritol is from 1:5 to 1:300, preferably from 1:10 to 1:300.

7. A confectionery composition including erythritol and sugar esters and/or fibers selected from pectin, guar gum, xanthan gum, locust bean gum, alginate, carrageenan, soluble cocoa fiber, soluble fiber of guar gum, cellulose, cellulose derivatives, beta-glucan, acetylated distarch adipate, n-OSA starch, hydroxypropyl starch phosphate, partially depolymerised fibers and mixtures of two or more thereof, wherein the weight ratio of sugar esters and/or fibers to erythritol is from 1:5 to 1:300, preferably from 1:10 to 1 :300.

8. A confectionery composition according to claim 7 **characterized in that** the confectionery composition is a chocolate composition.

9. A method for producing an erythritol-fiber and/or sugar ester composition comprising the steps of:
(i) dry blending of fibers and/or sugar esters and erythritol,
(ii) melting of said dry blend, and
(iii) solidification at lower temperature than temperature of step (ii), **characterized in that** fibers are selected from pectin, guar gum, xanthan gum, locust bean gum, alginate, carrageenan, soluble cocoa fiber, soluble fiber of guar gum, cellulose, cellulose derivatives, beta-glucan, acetylated distarch adipate, n-OSA starch, hydroxypropyl starch phosphate, partially depolymerised fibers and mixtures of two or more thereof and wherein the weight ratio of sugar esters and/or fibers to erythritol is from 1:5 to 1:300, preferably from 1:10 to 1:300.

## Patentansprüche

1. Verwendung von Zuckerestern und/oder Fasern, die ausgewählt sind aus Pektin, Guargummi, Xanthangummi, Johannisbrotkernmehl, Alginat, Carrageen, löslicher Kakaofaser, löslicher Guargummifaser, Cellulose, Cellulosederivaten, Beta-Glucan, acetyliertem Distärkeadipat, n-OSA-Stärke, Hydroxypropylstärkephosphat, teilweise depolymerisierten Fasern und Mischungen von zwei oder mehr davon zur Reduzierung der Kühlwirkung, insbesondere der sensorischen Kühlwirkung von Erithrytol, wobei das Verhältnis des kombinierten Gewichts von Fasern und/oder Zuckerestern zum Gewicht von Erithrytol von 1:5 bis 1:300, vorzugsweise von 1: 10 bis 1:300 beträgt.

2. Verwendung nach Anspruch 1 zur Reduzierung der Kühlwirkung von Erithrytol in einer Süßwarenzusammensetzung.

3. Verwendung nach einem der vorhergehenden Ansprüche, bei welcher die Süßwarenzusammensetzung eine Schokoladenzusammensetzung ist.

4. Verwendung nach einem der vorhergehenden Ansprüche, bei welcher das Erithrytol in der gesamten Zusammensetzung in einer Menge von 1 bis 70 Gew.-%, insbesondere in einer Menge von 5 bis 60 Gew.-% vorhanden ist.

5. Verwendung nach einem der vorhergehenden Ansprüche, bei welcher ein Süßstoff hoher Intensität zusätzlich zugegeben wird.

6. Gemeinsam geschmolzene Zusammensetzung aus Erithrytol und Zuckerestern und/oder Fasern, die ausgewählt sind aus Pektin, Guargummi, Xanthangummi, Johannisbrotkernmehl, Alginat, Carrageen, löslicher Kakaofaser, löslicher Guargummifaser, Cellulose, Cellulosederivaten, Beta-Glucan, acetyliertem Distärkeadipat, n-OSA-Stärke, Hydroxypropylstärkephosphat, teilweise depolymerisierten Fasern und Mischungen von zwei oder mehr davon, wobei das Gewichtsverhältnis von Fasern und/oder Zuckerestern zu Erithrytol von 1:5 bis 1:300, vorzugsweise von 1:10 bis 1:300 beträgt.

7. Süßwarenzusammensetzung, enthaltend Erithrytol und Zuckerester und/oder Fasern, die ausgewählt sind aus Pektin, Guargummi, Xanthangummi, Johannisbrotkernmehl, Alginat, Carrageen, löslicher Kakaofaser, löslicher Guargummifaser, Cellulose, Cellulosederivaten, Beta-Glucan, acetyliertem Distärkeadipat, n-OSA-Stärke, Hydroxypropylstärkephosphat, teilweise depolymerisierten Fasern und Mischungen von zwei oder mehr davon, wobei das Gewichtsverhältnis von Zuckerestern und/oder Fasern zu Erithrytol von 1:5 bis 1:300, vorzugsweise von 1:10 bis 1:300 beträgt.

8. Süßwarenzusammensetzung nach Anspruch 7, **dadurch gekennzeichnet, dass** die Süßwarenzusammensetzung eine Schokoladenzusammensetzung ist.

9. Verfahren zur Herstellung einer Erithrytol-Faser- und/oder -Zuckerester-Zusammensetzung, enthaltend die Schritte:
(i) Trockenmischen von Fasern und/oder Zuckerestern und Erithrytol,
(ii) Schmelzen der Trockenmischung und
(iii) Verfestigung bei einer niedrigeren Temperatur als der Temperatur von Schritt (ii),
**dadurch gekennzeichnet, dass** die Fasern ausgewählt sind aus Pektin, Guargummi, Xanthangummi, Johannisbrotkernmehl, Alginat, Carrageen, löslicher Kakaofaser, löslicher Guargummifaser, Cellulose, Cellulosederivaten, Beta-Glucan, acetyliertem Distärkeadipat, n-OSA-Stärke, Hydroxypropylstärkephosphat, teilweise depolymerisierten Fasern und Mischungen von zwei oder mehr davon, wobei das Gewichtsverhältnis von Zuckerestern und/oder Fasern zu Erithrytol von 1:5 bis 1:300, vorzugsweise von 1:10 bis 1:300 beträgt.

## Revendications

1. Utilisation d'esters de sucre et/ou de fibres choisies parmi la pectine, la gomme guar, la gomme xanthane, la gomme de fèves de caroube, les alginates, la carragénine, la fibre de cacao soluble, la fibre de gomme guar soluble, la cellulose, les dérivés cellulosiques, le bêta-glucane, l'adipate de di-amidon acétylé, l'amidon de n-OSA, le phosphate d'hydroxypropylamidon, les fibres partiellement dépolymérisées et des mélanges de deux ou plusieurs d'entre eux pour réduire l'effet de refroidissement, en particulier, l'effet de sensation de refroidissement de l'érythritol et dans lequel le rapport du poids combiné des fibres et/ou des esters de sucre au poids de l'érythritol est de 1:5 à 1:300, de préférence de 1:10 à 1:300.

2. Utilisation selon la revendication 1 pour réduire l'effet de refroidissement de l'érythritol dans une composition de confiserie.

3. Utilisation selon l'une quelconque des revendications précédentes, dans laquelle la composition de confiserie est une composition de chocolat.

4. Utilisation selon l'une quelconque des revendications précédentes, dans laquelle l'érythritol est présent dans la composition totale à raison de 1 à 70 % en poids, en particulier, en quantité de 5 à 60 % en poids.

5. Utilisation selon l'une quelconque des revendications précédentes, dans laquelle un édulcorant de haute intensité est ajouté en plus.

6. Composition co-fondue d'érythritol et d'esters de sucre et/ou de fibres choisies parmi la pectine, la gomme guar, la gomme xanthane, la gomme de fèves de caroube, les alginates, la carragénine, les fibres de cacao solubles, les fibres de gomme guar solubles, la cellulose, les dérivés cellulosiques, le bêta-gucane, l'adipate de di-amidon acétylé, l'amidon de n-OSA, le phosphate d'hydroxypropylamidon, les fibres partiellement dépolymérisées et des mélanges de deux ou plus de ceux-ci et dans lequel le rapport pondéral des fibres et/ou des esters de sucre à l'érythritol est de 1:5 à 1:300, de préférence de 1:10 à 1:300.

7. Composition de confiserie comprenant de l'érythritol et des esters de sucre et/ou des fibres choisies parmi la pectine, la gomme guar, la gomme xanthane, la gomme de fèves de caroube, les alginates, la carragénine, les fibres de cacao solubles, les fibres de gomme guar solubles, la cellulose, les dérivés cellulosiques, le bêta-glucane, l'adipate de di-amidon acétylé, l'amidon de n-OSA, le phosphate d'hydroxypropylamidon, les fibres partiellement dépolymérisées et les mélanges de deux ou plusieurs d'entre eux, dans laquelle le rapport pondéral des esters de sucres et/ou des fibres à l'érythritol est de 1:5 à 1:300, de préférence de 1:10 à 1:300.

8. Composition de confiserie selon la revendication 7, **caractérisée en ce que** la composition de confiserie est une composition de chocolat.

9. Procédé de production d'une composition de fibres d'érythritol et/ou d'esters de sucre, comprenant les étapes consistant à :
(i) mélanger à sec des fibres et/ou des esters de sucre et de l'érythritol,
(ii) faire fondre ledit mélange sec, et
(iii) solidifier à température plus basse que la température de l'étape (ii),
**caractérisé en ce que** les fibres sont choisies parmi la pectine, la gomme guar, la gomme xanthane, la gomme de fèves de caroube, les alginates, la carragénine, les fibres de cacao solubles, les fibres de gomme guar solubles, la cellulose, les dérivés cellulosiques, le bêta-glucane, l'adipate de di-amidon acétylé, l'amidon de n-OSA, le phosphate de dihydroxypropylamidon, les fibres partiellement dépolymérisées et des mélanges de deux ou plusieurs de ceux-ci et dans lequel le rapport pondéral des esters de sucre et/ou des fibres à l'érythritol est de 1:5 à 1:300, mieux encore de 1:10 à 1:300.
